# EUROPEAN PATENT APPLICATION

(11) **EP 4 819 709 A1**
(43) Date of publication of application: **07.10.2026**
(21) Application number: 24909759.3
(22) Date of filing: 02.08.2024
(51) Int. Cl.: H04W 64/00, H04W 4/35, G06F 16/29

(54) **TERMINAL POSITIONING METHOD AND APPARATUS, DEVICE, AND STORAGE MEDIUM**

(30) Priority: 26.12.2023 CN 202311798538
(71) Applicant: Hanshow Technology Co., Ltd., Jiaxing, Zhejiang 314031 (CN)
(72) Inventor: YU, Mingming, Jiaxing, Zhejiang 314000 (CN); GU, Hanchao, Jiaxing, Zhejiang 314000 (CN); ZHAO, Jianguo, Jiaxing, Zhejiang 314000 (CN); GAO, Bo, Jiaxing, Zhejiang 314000 (CN); LIANG, Min, Jiaxing, Zhejiang 314000 (CN)
(74) Representative: Brunazzi, Stefano
(86) International application number: PCT/CN2024/109555
(87) International publication number: WO 2025/138805

(57) **Abstract**

Provided are a terminal positioning method, a terminal positioning apparatus, a device, and a storage medium. The terminal positioning method includes the following: if a converged base station detects target configuration information sent by a server, the converged base station sends the target configuration information and a working channel of a target terminal according to a sending time of the target configuration information, wherein the target configuration information and the working channel are used for the target terminal to return a positioning signal to the converged base station of the target terminal (S101); the converged base station acquires the positioning signal returned by the target terminal and performs preliminary calculation processing on the positioning signal to convert the positioning signal into position information (S102); and the converged base station sends the position information to the server, wherein the position information is used for the server to perform update processing on information of a map locally stored in the server and display processing on updated information of the map, to achieve positioning of the target terminal (S103).

## Description

The present application claims priority to Chinese Patent Application No. 202311798538.7 filed with the China National Intellectual Property Administration (CNIPA) on Dec. 26, 2023, the disclosure of which is incorporated herein by reference in its entirety.

### TECHNICAL FIELD

The present application relates to the field of computer technologies, for example, to a terminal positioning method, a terminal positioning apparatus, a device, and a storage medium.

### BACKGROUND

With the continuous development of information technology, various technological terminals are continuously entering the traditional supermarket industry, promoting the digital transformation of the supermarket industry. Precise positioning of the terminals in the supermarkets can improve the work efficiency and accuracy of employees, and can also make it convenient for customers to find desired commodities more quickly, thereby enhancing the shopping experience of customers.

### SUMMARY

The present application provides a terminal positioning method, a terminal positioning apparatus, a device, and a storage medium, to achieve precise positioning of a target terminal through three-party interaction among a server, a converged base station, and the target terminal, such that multiple systems in a supermarket can work collaboratively to achieve unified digital management of supermarket assets.

Embodiments of the present application provide a terminal positioning method performed by a converged base station. The terminal positioning method performed by the converged base station includes the steps below.

In response to detecting target configuration information sent by a server, the target configuration information and a working channel of a target terminal are sent to the target terminal according to a sending time of the target configuration information, wherein the target configuration information and the working channel are used for the target terminal to return a positioning signal to the converged base station.

The positioning signal returned by the target terminal is acquired, and preliminary calculation processing is performed on the positioning signal to convert the positioning signal into position information.

The position information is sent to the server, wherein the position information is used for the server to perform update processing on information of a map locally stored in the server and display processing on updated information of the map, to achieve positioning of the target terminal.

The terminal positioning method also includes the following: in response to a working state of any of a narrowband module, a positioning module, and a wideband module which are local to the converged base station being a service processing state, the sending time of the target configuration information is determined according to a target service processing completing time; and in response to all working states of the narrowband module, the positioning module, and the wideband module which are local to the converged base station being an idle state, the sending time is determined to be a current time.

The target configuration information to be sent to the target terminal is determined by the server in the following manner:

In response to a working mode of the target terminal being an unmovable mode, the target configuration information to be sent to the target terminal is determined according to a first sending period and a first number of sending times.

In response to the working mode of the target terminal being a movable mode, the target configuration information to be sent to the target terminal is determined according to a second sending period and a second number of sending times. The first sending period is greater than the second sending period, and the first number of sending times is less than the second number of sending times.

Embodiments of the present application provide a terminal positioning method performed by a server. The terminal positioning method performed by the server includes the steps below.

Target configuration information to be sent to a target terminal is determined according to a positioning requirement of the target terminal. The target configuration information includes a sending period and a number of sending times for the target terminal to send a positioning signal to a converged base station.

The target configuration information is sent to the converged base station, wherein a sending time of the target configuration information is used for the converged base station to send the target configuration information and a working channel to the target terminal.

Position information returned by the converged base station is acquired, and update processing is performed on information of a map locally stored in the server according to the position information and display processing on updated information of the map, to achieve positioning of the target terminal.

In response to a working state of any of a narrowband module, a positioning module, and a wideband module which are local to the converged base station being a service processing state, the sending time of the target configuration information is determined according to a target service processing completing time by the converged base station; and in response to all working states of the narrowband module, the positioning module, and the wideband module which are local to the converged base station being an idle state, the sending time is determined to be a current time by the converged base station.

The target configuration information to be sent to the target terminal is determined in the following manner:

In response to a working mode of the target terminal being an unmovable mode, the target configuration information to be sent to the target terminal is determined according to a first sending period and a first number of sending times.

In response to the working mode of the target terminal being a movable mode, the target configuration information to be sent to the target terminal is determined according to a second sending period and a second number of sending times. The first sending period is greater than the second sending period, and the first number of sending times is less than the second number of sending times.

Embodiments of the present application provide a terminal positioning apparatus. The apparatus is configured in a converged base station and includes a first sending module, a processing module, and a first positioning module.

The first sending module is configured to, in response to detecting target configuration information sent by a server, send the target configuration information and a working channel of a target terminal to the target terminal according to a sending time of the target configuration information, wherein the target configuration information and the working channel are used for the target terminal to return a positioning signal to the converged base station.

The processing module is configured to acquire the positioning signal returned by the target terminal, and perform preliminary calculation processing on the positioning signal to convert the positioning signal into position information.

The first positioning module is configured to send the position information to the server, wherein the position information is used for the server to perform update processing on information of a map locally stored in the server and display processing on updated information of the map, to achieve positioning of the target terminal.

The apparatus is configured to: in response to a working state of any of a narrowband module, a positioning module, and a wideband module which are local to the converged base station being a service processing state, determine the sending time of the target configuration information according to a target service processing completing time; and in response to all working states of the narrowband module, the positioning module, and the wideband module which are local to the converged base station being an idle state, determine the sending time to be a current time.

In response to a working mode of the target terminal being an unmovable mode, the target configuration information to be sent to the target terminal is determined according to a first sending period and a first number of sending times by the server; and in response to the working mode of the target terminal being a movable mode, the target configuration information to be sent to the target terminal is determined according to a second sending period and a second number of sending times by the server. The first sending period is greater than the second sending period, and the first number of sending times is less than the second number of sending times.

Embodiments of the present application provide a terminal positioning apparatus. The apparatus is configured in a server and includes a determining module, a second sending module, and a second positioning module.

The determining module is configured to determine target configuration information to be sent to a target terminal according to a positioning requirement of the target terminal. The target configuration information includes a sending period and a number of sending times for the target terminal to send a positioning signal to a converged base station.

The second sending module is configured to send the target configuration information to the converged base station, wherein a sending time of the target configuration information is used for the converged base station to send the target configuration information and a working channel to the target terminal.

The second positioning module is configured to acquire position information returned by the converged base station, and perform update processing on information of a map locally stored in the server according to the position information and display processing on updated information of the map, to achieve positioning of the target terminal.

In response to a working state of any of a narrowband module, a positioning module, and a wideband module which are local to the converged base station being a service processing state, the sending time of the target configuration information is determined according to a target service processing completing time by the converged base station; and in response to all working states of the narrowband module, the positioning module, and the wideband module which are local to the converged base station being an idle state, the sending time is determined to be a current time by the converged base station.

The determining module is configured to: in response to a working mode of the target terminal being an unmovable mode, determine the target configuration information to be sent to the target terminal according to a first sending period and a first number of sending times; and in response to the working mode of the target terminal being a movable mode, determine the target configuration information to be sent to the target terminal according to a second sending period and a second number of sending times. The first sending period is greater than the second sending period, and the first number of sending times is less than the second number of sending times.

Embodiments of the present application provide an electronic device.

The electronic device includes at least one processor and a memory. The memory is communicatively connected to the at least one processor.

The memory stores a computer program executable by the at least one processor. The computer program is configured to, when executed by the at least one processor, cause the at least one processor to perform the terminal positioning method according to any embodiment of the present application.

Embodiments of the present application provide a computer-readable storage medium. The computer-readable storage medium stores computer instructions that, when executed by a processor, implement the terminal positioning method according to any embodiment of the present application.

### BRIEF DESCRIPTION OF DRAWINGS

The accompanying drawings used in the description of the embodiments will be briefly described below. Apparently, the accompanying drawings described below illustrate part of embodiments of the present application, and those of ordinary skill in the art may obtain other accompanying drawings based on the accompanying drawings described below on the premise that no creative work is done.
FIG. 1A is a flowchart of a terminal positioning method according to embodiment one of the present application.
FIG. 1B is a diagram illustrating the structure of a converged base station according to embodiment one of the present application.
FIG. 2 is a flowchart of a terminal positioning method according to embodiment two of the present application.
FIG. 3 is a block diagram illustrating the structure of a terminal positioning apparatus according to embodiment three of the present application.
FIG. 4 is a block diagram illustrating the structure of a terminal positioning apparatus according to embodiment four of the present application.
FIG. 5 is a diagram illustrating the structure of an electronic device according to embodiment five of the present application.

### DETAILED DESCRIPTION

Technical solutions in the embodiments of the present application are described in conjunction with the drawings in the embodiments of the present application. Obviously, the embodiments described below are part, not all, of the embodiments of the present application. Based on the embodiments of the present application, all other embodiments obtained by those of ordinary skill in the art without creative work are within the scope of the present application.

It is to be noted that terms such as "first", "second", "target", "candidate", and "alternative" in the description, claims, and drawings of the present application are used to distinguish between similar objects and are not necessarily used to describe a particular order or sequence. It is to be understood that the data used in this manner is interchangeable where appropriate, so that the embodiments of the present application described herein may also be implemented in a sequence other than those illustrated or described herein. Additionally, terms "comprising", "including", and any other variations thereof are intended to encompass a non-exclusive inclusion. For example, a process, method, system, product, or device that includes a series of steps or units not only includes the expressly listed steps or units but may also include other steps or units that are not expressly listed or are inherent to such a process, method, product, or device.

It is to be noted that for the problem of terminal positioning in supermarket scenarios, existing solutions mostly involve deploying multiple independent systems simultaneously in supermarket venues, such as WLAN systems, price tag systems, and positioning systems, which solve users' broadband data communication requirements, electronic price tag management requirements, and positioning service requirements, respectively. Multiple decentralized systems in the same venue can partially meet user needs in practical applications. However, such non-native unified multi-system combination solutions encounter many problems in actual implementation and use. Some problems are described below. 1. Separate installations are required during construction and deployment. 2. The control interfaces of multiple systems are independent of each other, making unified management difficult for users and coordination of functions challenging. 3. Overlapping working frequency bands among multiple systems may exist, and mutual interference on radio frequency channels during operation is difficult to avoid. To address the preceding problems, the present application proposes a solution that performs three-party interaction among a server, a converged base station, and a terminal to send configuration information and allocate working channels for different terminals, thereby enabling real-time precise positioning of terminal devices. The solution deeply integrates the price tag management system with clear requirements in the supermarket industry with broadband services and precise positioning services. From the design source, the originally independent multiple sets of hardware and software are uniformly integrated so that multiple systems work collaboratively to achieve unified digital management of shelf goods and supermarket assets. The implementation will be introduced in the following embodiments.

### Embodiment one

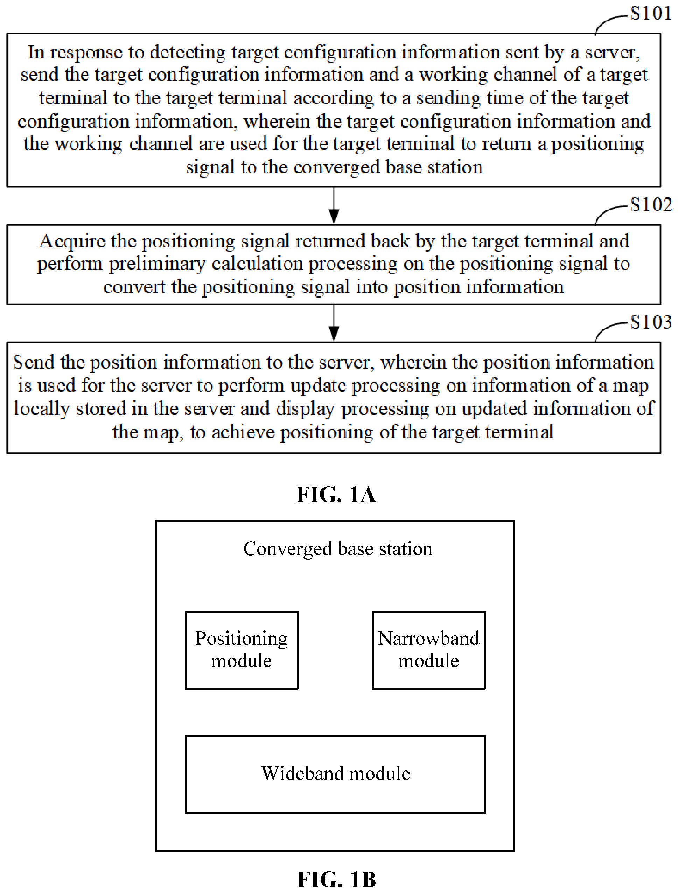

FIG. 1A is a flowchart of a terminal positioning method according to embodiment one of the present application. FIG. 1B is a diagram illustrating the structure of a converged base station according to embodiment one of the present application. This embodiment is applicable to the situation in which a converged base station interacts with a target terminal according to target configuration information sent by a server to achieve precise positioning of the target terminal. The terminal positioning method may be performed by a terminal positioning apparatus. The apparatus may be implemented in the form of software and/or hardware and may be integrated into an electronic device with a terminal positioning function. As shown in FIG. 1A, the terminal positioning method includes S101 to S103.

In S101, in response to detecting target configuration information sent by a server, the target configuration information and a working channel of a target terminal are sent to the target terminal according to a sending time of the target configuration information, wherein the target configuration information and the working channel are used for the target terminal to return a positioning signal to the converged base station.

A target terminal may refer to a terminal configured with a radio frequency signal transmitting component. The radio frequency signal transmitting component may be, for example, an Ultra Wide Band (UWB) signal transmitter, an Angle-of-Arrival (AOA) signal transmitter, or other wireless signal transmitter. The target terminal may interact with the converged base station by using the radio frequency signal transmitting component to achieve positioning. The target terminal may be placed in a supermarket venue, and at least one target terminal may be provided.

A target terminal may be a terminal device of a supermarket and may include a narrowband electronic shelf label (ESL). An electronic shelf label is a form of a terminal and may be installed in a supermarket through actual hardware. ESL price tags may include Electrophoresis Display (EPD) price tags and Liquid Crystal Display (LCD) price tags. The target terminal may also include a terminal that integrates a narrowband module and a wideband module, such as a shopping cart, a smart camera, and a robot. The target terminal also includes a position tag that integrates a narrowband module and a positioning module. Target configuration information refers to configuration information that needs to be sent to a target terminal, wherein the target configuration information is used for the target terminal to send a positioning signal. The target configuration information may include a sending period and a number of sending times for the target terminal to send a positioning signal to the converged base station.

Optionally, with reference to FIG. 1B, the converged base station includes a narrowband module, a positioning module, and a wideband module. Correspondingly, the target configuration information and the working channel of the target terminal are sent to the target terminal according to the sending time of the target configuration information in the following manner: the sending time of the target configuration information and the working channel of the target terminal are determined according to working states of the narrowband module, the positioning module, and the wideband module which are local to the converged base station; and the target configuration information and the working channel are sent to the target terminal based on the sending time.

Optionally, if the narrowband module, the positioning module, and the wideband module which are local to the converged base station are in a service processing state of service data sending or receiving, the sending of the target configuration information shall wait until the service data sending or receiving is completed. Correspondingly, the sending time of the target configuration information is determined according to the working states of the narrowband module, the positioning module, and the wideband module which are local to the converged base station in the following manner: in response to a working state of any of a narrowband module, a positioning module, and a wideband module which are local to the converged base station being a service processing state, the sending time of the target configuration information is determined according to a target service processing completing time; and in response to all working states of the narrowband module, the positioning module, and the wideband module which are local to the converged base station being an idle state, the sending time is determined to be a current time, and then the narrowband module is invoked to send the target configuration information to the target terminal at the current time.

It is to be noted that by using the preceding manner, the target configuration information is prevented from being sent at the time when multiple modules of the converged base station perform service data transmission and reception, to ensure that the sending process of the configuration information is not interfered with by service data, and improve the reliability of configuration information delivery.

Optionally, the converged base station may send the target configuration information and the working channel of the target terminal to the target terminal based on the working channel of the target terminal, or may directly send the target configuration information and the working channel of the target terminal to the target terminal based on the working channel of the local narrowband module. The present application does not impose a limitation thereon.

The converged base station may send the target configuration information and the working channel to the target terminal simultaneously according to the sending time of the target configuration information and the working channel of the target terminal, wherein the target configuration information and the working channel are used for the target terminal to return a positioning signal to the converged base station.

Optionally, the target terminal may send a positioning signal on the allocated working channel at a specified sending period according to the received target configuration information.

Optionally, the working channel of the target terminal is determined in the following manner: in response to a working state of the wideband module local to the converged base station being an idle state, a preset default working channel is used as the working channel of the target terminal; and in response to the working state of the wideband module local to the converged base station being a service processing state or a pause state, a current channel of the wideband module is determined, and a target channel that is different from the current channel is screened from candidate channels according to the current channel, , and the target channel is used as the working channel of the target terminal.

The idle state of the wideband module is a pre-specified state in which the wideband module will not be enabled for a long time or permanently. The pause state is a pre-specified state in which the wideband module temporarily stops working for a short period of time.

Optionally, a channel that is as far away as possible from the current channel used by the wideband service module may be selected from candidate channels as the target channel according to the current channel.

Optionally, after determining the current channel of the wideband module, a center frequency point of the current channel of the wideband module may be determined. Channels beyond a preset isolation bandwidth from the center frequency point are determined as candidate channels according to the center frequency point and the preset isolation bandwidth. A target channel different from the current channel is then screened from the candidate channels. The influence of the wideband signal on the reception of the positioning signal is less than the effective signal-to-noise ratio threshold of the positioning signal.

The target channel obtained through the preceding manner may extend a preset isolation bandwidth distance to the left and right with the center frequency point as the center. Thus, the working channel of the wideband module can be separated from the working channel of the target terminal, and the work efficiency of the wideband module and subsequent interaction with the target terminal can be effectively improved.

It is to be noted that the selectable ranges of the working channels for multiple modules of the converged base station are all within the frequency range of 2.4 GHz to 2.5 GHz and thus overlap. Therefore, it is necessary to stagger the working channels through configuration, that is, configuring the modules to different channels (frequencies). Through screening a target channel different from the current channel from candidate channels, the working channels of multiple modules of each converged base station are staggered in frequency, thereby improving work efficiency.

It is to be noted that a narrowband channel of the target terminal may be set to receive configuration information sent by the converged base station. If the channel is not fixed, the base station needs to re-allocate a channel each time, and this process affects work efficiency. By means of fixing the communication channel, the work efficiency can be improved.

Optionally, the converged base station may also interact with an integrated management platform of the server to obtain other configuration information (such as display information of price tags, Internet Protocol (IP) addresses of wideband terminals, and traveling speed of robot services) and send the configuration information to the target terminal to achieve three-party interaction for service processing.

In S102, the positioning signal returned by the target terminal is acquired, and preliminary calculation processing is performed on the positioning signal to convert the positioning signal into position information.

Optionally, a positioning signal receiving module inside the converged base station may, based on a preset target channel corresponding to each target terminal, acquire the positioning signal returned by the target terminal through a corresponding working channel, and perform preliminary processing inside the base station.

Illustratively, preliminary calculation processing may be performed on the positioning signal based on a preset positioning algorithm, such as an AOA positioning algorithm, to convert the positioning signal into position information.

In S103, the position information is sent to the server, wherein the position information is used for the server to perform update processing on information of a map locally stored in the server and display processing on updated information of the map, to achieve positioning of the target terminal.

Optionally, the converged base station may upload calculated position information to a positioning service server module on the server side through the network, that is, the converged base station sends the position information to the server to perform final processing on the received position information and then display and mark the position information on the map.

It is to be noted that the converged base station may control the communication behavior of all modules in the system through the narrowband module. This configuration enables the integrated management platform or the converged base station to uniformly coordinate the wireless spectrum resources used by multiple services and avoid the mutual interference of radio frequency that cannot be avoided in the original decentralized systems. For example, in the preceding process, the interference of WLAN 2.4 GHz signals on AOA positioning signals is considered. Such coordination and scheduling means greatly improve the availability and robustness of the entire solution. This feature is one of the value points of the converged base station.

It is to be noted that the solution proposed in the present application integrates positioning services and wideband services that are urgently needed in the supermarket field on the basis of the existing electronic price tag services in supermarkets. Through operation and maintenance using a unified comprehensive management platform, coordination among multiple services can be conveniently achieved. The solution not only fulfills the digital management of commodity prices but also meets customers' needs for precise positioning of shelves, commodities, and hotspot locations, thereby improving employee work efficiency and enhancing operational benefits.

In the technical solution of the embodiments of the present application, if a converged base station detects target configuration information sent by a server, the converged base station sends the target configuration information and a working channel of a target terminal according to a sending time of the target configuration information, wherein the target configuration information and the working channel are used for the target terminal to return a positioning signal to the converged base station of the target terminal; the converged base station acquires the positioning signal returned by the target terminal and performs preliminary calculation processing on the positioning signal to convert the positioning signal into position information; and the converged base station sends the position information to the server, wherein the position information is used for the server to perform update processing on information of a map locally stored in the server and display processing on updated information of the map, to achieve positioning of the target terminal. In this manner, precise positioning of the target terminal can be achieved through three-party interaction among the server, the converged base station, and the target terminal, so that multiple systems in a supermarket work collaboratively to achieve unified digital management of shelf goods and supermarket assets.

It is to be noted that the internal functional modules of the converged base station may be individually enabled or disabled to meet the needs of different user service scenarios. For example, in the early stage of customer project implementation, only the electronic price tag service may be needed, so the wideband service and positioning service modules may be temporarily set to an idle state to save system power consumption. As requirements evolve, such as the introduction of robot patrol services and real-time positioning of shopping carts, the wideband service and positioning service may be gradually enabled.

It is to be noted that the converged base station deeply integrates the price tag service, positioning service, and wideband communication service with clear requirements in the supermarket field. One system may be used to solve multiple business needs of users. Moreover, the converged base station internally achieves unified management and scheduling of narrowband, wideband, and positioning services, thereby better meeting the business needs of the supermarket field. Compared with the previous solution obtained by combining decentralized devices, the availability and robustness of the system built according to the solution of the present application are greatly improved. In addition, radio frequency channel avoidance can be achieved according to user service status to avoid conflicts between multiple services.

Optionally, the converged base station in the present application integrates a WLAN wideband service module in hardware, and a wideband service server is configured in the server. This configuration enables multiple base stations to coordinate and use the received signal strength of wideband WLAN signals to perform triangulation positioning. For the terminals in the supermarkets with large data transmission and reception requirements, such as shopping carts and robots, a wideband service module may be integrated. For example, a robot may upload acquired pictures and video information to the integrated management platform via the integrated WLAN module. The integrated management platform may be a remote Software as a Service (SaaS) or a local service management platform. Compared with multiple management interfaces of a decentralized system, the integrated management platform can manage and coordinate multiple services more conveniently and effectively across the entire system, thereby enhancing user value.

A narrowband module may also be integrated in the converged base station, corresponding to the narrowband service server in the server. If a target terminal has a requirement for service coordination through the converged base station, the target terminal may receive small amounts of data information forwarded from the integrated management platform by the converged base station through the integrated radio frequency signal receiving component. For example, display information of price tags, IP addresses of wideband terminals, traveling speed of robot services, and other configuration information may all be sent through the narrowband module.

Inside the converged base station, the hardware integrates a positioning service receiving module, a wideband service module, and a price tag service module (narrowband module), which may interact with a positioning service antenna, a narrowband service antenna, and a wideband WLAN service antenna, respectively, to achieve unified coordination of antenna transmission and reception operations for multiple services to avoid mutual interference, thereby improving the robustness of the system. In terms of software, the work of multiple modules is uniformly coordinated in combination with business requirements. This configuration makes the converged base station not a simple hardware bundled solution, but a native fusion system of multiple components. For example, based on business requirements, configuration information required for positioning services may be sent through the narrowband module; and information exchange may be performed with terminals requiring broadband communication through the narrowband module to perform access scheduling for wideband services. When the positioning service server module on the server side needs to initiate a positioning operation for a specified target terminal (such as a shopping cart that integrates a narrowband module and a positioning module) according to user instructions or established strategies, that is, according to the positioning requirement of the target terminal, the preceding S101 to S103 operations may be performed to achieve precise positioning of the target terminal.

### Embodiment two

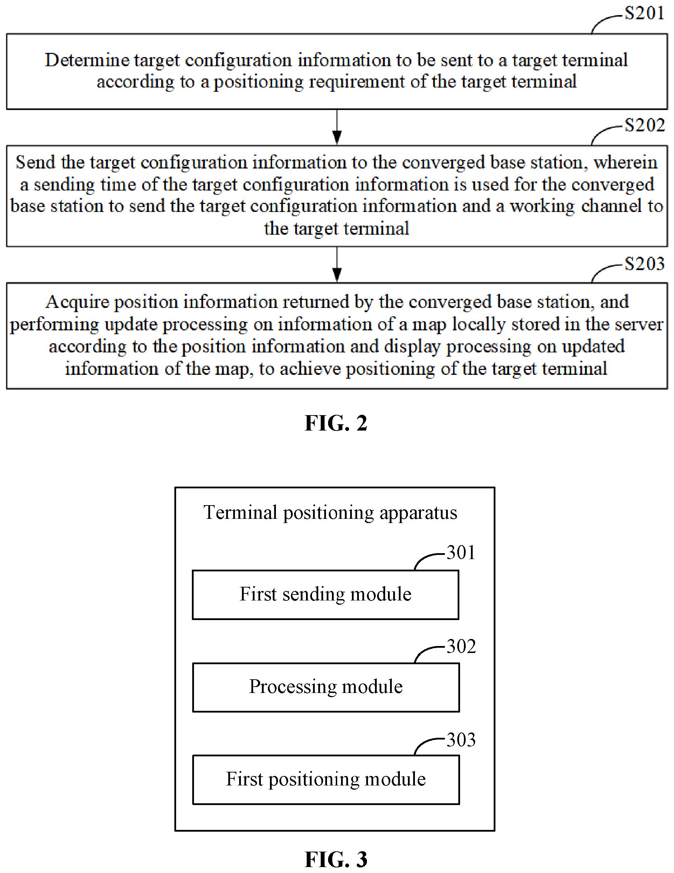

FIG. 2 is a flowchart of a terminal positioning method according to embodiment two of the present application. This embodiment is applicable to the situation in which a server interacts with a converged base station according to a positioning requirement of a target terminal to achieve precise positioning of the target terminal. The terminal positioning method may be performed by a terminal positioning apparatus. The apparatus may be implemented in the form of software and/or hardware and may be integrated into an electronic device with a terminal positioning function. As shown in FIG. 2, the terminal positioning method includes S201 to S203.

In S201, target configuration information to be sent to a target terminal is determined according to a positioning requirement of the target terminal.

The positioning requirement refers to a requirement for setting different positioning information transmission modes according to different types of terminals or user requirements for positioning of the target terminal in actual use.

It is to be noted that the server may receive a positioning requirement for a target terminal issued by relevant personnel and determine a working mode of the specified target terminal in the positioning requirement. Different positioning signal sending strategies may be determined for different target terminals according to the working mode. The strategies may be positioning signal sending strategies with a specified sending period and number of sending times.

It is to be noted that the software in the server may include a narrowband service server, a wideband service server, a positioning service server, a service integrated management platform, and the like. According to the positioning requirement of the target terminal, the positioning service server module of the server may submit the target configuration information to the narrowband service server module on the server side.

Optionally, the target configuration information to be sent to the target terminal is determined in the following manner: in response to a working mode of the target terminal being an unmovable mode, the target configuration information to be sent to the target terminal is determined according to a first sending period and a first number of sending times; and in response to the working mode of the target terminal being a movable mode, the target configuration information to be sent to the target terminal is determined according to a second sending period and a second number of sending times.

A target terminal with a working mode being an unmovable mode may be an electronic shelf label or a smart camera. A target terminal with a working mode being a movable mode may be a shopping cart or a robot. The first sending period is greater than the second sending period, and the first number of sending times is less than the second number of sending times.

Illustratively, EPD price tags, LCD price tags, and cameras on shelves have relatively fixed positions and may send a positioning signal every 1 to 2 hours. Shopping carts and robots are generally in a moving state, so the frequency of sending positioning signals is higher. For example, a shopping cart needs to send a positioning signal every second. In this manner, waste of resources can be reduced.

In S202, the target configuration information is sent to the converged base station, wherein a sending time of the target configuration information is used for the converged base station to send the target configuration information and a working channel to the target terminal.

The internal hardware of the converged base station includes an uplink network module, a narrowband module (used for small data volume communication, such as transmission of ESL price tag information and configuration information of cameras or robot devices), a WLAN wideband module (used for large data volume communication, such as transmission of images and video data collected by cameras and robots), and a positioning module (used for receiving and preprocessing positioning signals emitted by position tags). The converged base station management platform software inside the converged base station is responsible for coordination of multiple hardware modules of the base station. The sending time refers to the time when the converged base station sends the target configuration information to the corresponding target terminal. The working channel refers to the communication frequency between the target terminal and different modules of the converged base station. The selectable ranges of the working channels of the narrowband module, the wideband module, and the positioning module of the converged base station are all within the frequency range of 2.4 GHz to 2.5 GHz. For example, the narrowband module may use 2.402 GHz, the positioning module may use 2.480 GHz, and the wideband module may use 2.462 GHz.

It is to be noted that in the converged base station, the working channel of the narrowband module may be preset to a fixed value; the working channel of the wideband module may be allocated on site during network deployment or dynamically selected by the converged base station according to the radio frequency environment in which the converged base station is located, that is, the working channel of the wideband module may be a variable value; the channel used by the positioning module needs to avoid the channels currently used by the preceding narrowband module and wideband module. For example, the narrowband module uses 2.402 GHz, the wideband module uses 2.462 GHz, and the positioning module uses 2.480 GHz.

It is to be noted that the converged base station includes a price tag service module, a positioning service module, and a wideband service module. The spectrum resources occupied by the preceding modules during operation may be uniformly coordinated by the processor of the converged base station.

Optionally, the server may also obtain the real-time working states of multiple service modules through an internal fusion management platform of the server, allocate an appropriate working channel to the target terminal accordingly, and send the allocated working channel together with the target configuration information to the converged base station, and the converged base station sends the target configuration information and the allocated working channel to the target terminal.

Optionally, after the target configuration information to be sent to the target terminal is determined, the server may use the narrowband service server module on the server side to communicate with the converged base station, to send the target configuration information to the converged base station, and the converged base station determines the sending time and working channel of the target configuration information, and sends the target configuration information and the working channel to the target terminal according to the sending time.

In S203, position information returned by the converged base station is acquired, and update processing is performed on information of a map locally stored in the server according to the position information and display processing is performed on updated information of the map, to achieve positioning of the target terminal.

Optionally, update processing is performed on the information of the map locally stored in the server according to the position information and display processing is performed on updated information of the map in the manner: a historical coordinate of the target terminal is determined in a map locally stored in the server, and whether the deviation between a current coordinate of the target terminal in the position information and the historical coordinate is within a preset deviation range is determined; and in response to the deviation between the current coordinate of the target terminal in the position information and the historical coordinate being within the preset deviation range, the information of the map locally stored in the server is updated according to the current coordinate, and an updated map is displayed to relevant personnel.

Optionally, different preset deviation ranges may be set for target terminals in an unmovable mode and in a movable mode according to the working mode of the target terminal. For example, a target terminal in an unmovable mode allows a small deviation range. A deviation that is too large is considered unreasonable. A target terminal in a movable mode allows a large deviation range. If the deviation is too small, it can be assumed that no movement exists, in which case no update is needed, and an error alert is issued to the target device.

Optionally, the target terminal is also configured to send a service coordination request to the converged base station. The server may receive the service coordination request forwarded by the converged base station to coordinate and process the same service request for different target terminals. The target terminal is also configured to upload acquired pictures and video information to the integrated management platform of the server via the integrated WLAN module.

Optionally, the server may determine coordinate data of the target terminal according to the position information, combine the coordinate data with pre-measured map information, and then present and display the information on the map to the user.

Optionally, the server may also perform position information calculation according to positioning information of the same target terminal received from multiple converged base stations to obtain positioning information with higher precision for the target terminal. Correspondingly, update processing is performed on the information of the map locally stored in the server according to the position information and display processing is performed on updated information of the map in the following manner: positioning information of the same target terminal by at least two converged base stations is determined according to the position information; and position calculation is performed on the target terminal according to the positioning information to determine a target position of the target terminal, and update processing is performed on the information of the map locally stored in the server according to the target position and display processing is performed on updated information of the map.

In the technical solution of the embodiments of the present application, a server determines target configuration information to be sent to a target terminal according to a positioning requirement of the target terminal; the server sends the target configuration information to a converged base station wherein a sending time of the target configuration information is used for the converged base station to send the target configuration information and a working channel to the target terminal; the server acquires position information returned by the converged base station and performs update processing on information of a map locally stored in the server according to the position information and display processing on updated information of the map, to achieve positioning of the target terminal. In this manner, precise positioning of the target terminal can be achieved through three-party interaction among the server, the converged base station, and the target terminal, so that multiple systems in a supermarket work collaboratively to achieve unified digital management of shelf goods and supermarket assets.

### Embodiment three

FIG. 3 is a block diagram illustrating the structure of a terminal positioning apparatus according to embodiment three of the present application. This embodiment is applicable to the situation in which a converged base station interacts with a target terminal according to target configuration information sent by a server to achieve precise positioning of the target terminal. The terminal positioning apparatus provided by the embodiments of the present application may perform the terminal positioning method provided by any embodiment of the present application and has corresponding functional modules for performing the terminal positioning method. The terminal positioning apparatus may be implemented in the form of hardware and/or software and is configured in a device with a terminal positioning function. As shown in FIG. 3, the terminal positioning apparatus includes a first sending module 301, a processing module 302, and a first positioning module 303.

The first sending module 301 is configured to, in response to detecting target configuration information sent by a server, send the target configuration information to a target terminal according to a sending time of the target configuration information and a working channel of the target terminal, wherein the target configuration information is used for the target terminal to return a positioning signal to the converged base station.

The processing module 302 is configured to acquire the positioning signal returned by the target terminal, and perform preliminary calculation processing on the positioning signal to convert the positioning signal into position information.

The first positioning module 303 is configured to send the position information to the server, wherein the position information is used for the server to perform update processing on information of a map locally stored in the server and display processing on updated information of the map, to achieve positioning of the target terminal.

In the technical solution of the embodiments of the present application, if a converged base station detects target configuration information sent by a server, the converged base station sends the target configuration information and a working channel of a target terminal according to a sending time of the target configuration information, wherein the target configuration information and the working channel are used for the target terminal to return a positioning signal to the converged base station; the converged base station acquires the positioning signal returned by the target terminal and performs preliminary calculation processing on the positioning signal to convert the positioning signal into position information; and the converged base station sends the position information to the server, wherein the position information is used for the server to perform update processing on information of a map locally stored in the server and display processing on updated information of the map, to achieve positioning of the target terminal. In this manner, precise positioning of the target terminal can be achieved through three-party interaction among the server, the converged base station, and the target terminal, so that multiple systems in a supermarket work collaboratively to achieve unified digital management of shelf goods and supermarket assets.

The converged base station includes a narrowband module, a positioning module, and a wideband module. Correspondingly, the first sending module 301 may include a determining unit and a sending unit.

The determining unit is configured to determine the sending time of the target configuration information and the working channel of the target terminal according to the working states of the narrowband module, the positioning module, and the wideband module which are local to the converged base station.

The sending unit is configured to send the target configuration information and the working channel to the target terminal based on the sending time.

The determining unit is configured to: in response to a working state of the wideband module local to the converged base station being an idle state, use a preset default working channel as the working channel of the target terminal; and in response to the working state of the wideband module local to the converged base station being a service processing state or a pause state, determine a current channel of the wideband module, and screen, from candidate channels according to the current channel, a target channel that is different from the current channel, and use the target channel as the working channel of the target terminal.

### Embodiment four

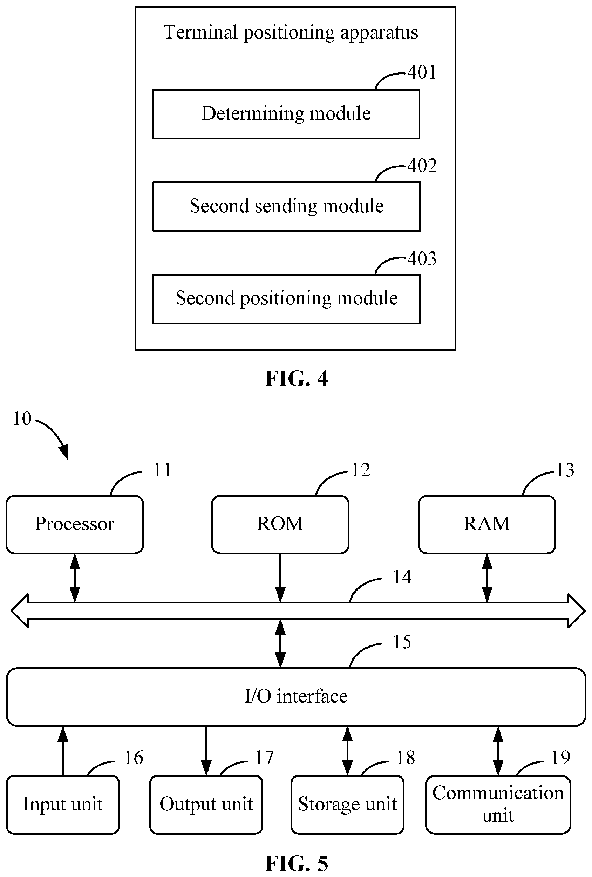

FIG. 4 is a block diagram illustrating the structure of a terminal positioning apparatus according to embodiment four of the present application. This embodiment is applicable to the situation in which a server interacts with a converged base station according to a positioning requirement of a target terminal to achieve precise positioning of the target terminal. The terminal positioning apparatus provided by the embodiments of the present application may perform the terminal positioning method provided by any embodiment of the present application and has corresponding functional modules for performing the terminal positioning method. The terminal positioning apparatus may be implemented in the form of hardware and/or software and is configured in a device with a terminal positioning function. As shown in FIG. 4, the terminal positioning apparatus includes a determining module 401, a second sending module 402, and a second positioning module 403.

The determining module 401 is configured to determine target configuration information to be sent to a target terminal according to a positioning requirement of the target terminal. The target configuration information includes a sending period and a number of sending times for the target terminal to send a positioning signal to a converged base station.

The second sending module 402 is configured to send the target configuration information to the converged base station, wherein a sending time of the target configuration information is used for the converged base station to send the target configuration information and a working channel to the target terminal.

The second positioning module 403 is configured to acquire position information returned by the converged base station, and perform update processing on information of a map locally stored in the server according to the position information and display processing on updated information of the map, to achieve positioning of the target terminal.

In the technical solution of the embodiments of the present application, target configuration information to be sent to a target terminal is determined according to a positioning requirement of the target terminal; the target configuration information is sent to the converged base station, wherein a sending time of the target configuration information is used for the converged base station to send the target configuration information and a working channel to the target terminal; position information returned by the converged base station is acquired, and update processing is performed on information of a map locally stored in the server according to the position information and display processing on updated information of the map, to achieve positioning of the target terminal. In this manner, precise positioning of the target terminal can be achieved through three-party interaction among the server, the converged base station, and the target terminal, so that various systems in a supermarket work collaboratively to achieve unified digital management of shelf goods and supermarket assets.

The determining module 401 is configured to: in response to a working mode of the target terminal being an unmovable mode, determine the target configuration information to be sent to the target terminal according to a first sending period and a first number of sending times; in response to the working mode of the target terminal being a movable mode, determine the target configuration information to be sent to the target terminal according to a second sending period and a second number of sending times. The first sending period is greater than the second sending period, and the first number of sending times is less than the second number of sending times.

The second positioning module 403 is configured to: determine a historical coordinate of the target terminal in a map locally stored in the server, and determine whether the deviation between a current coordinate of the target terminal in the position information and the historical coordinate is within a preset deviation range; and in response to the deviation between the current coordinate of the target terminal in the position information and the historical coordinate being within the preset deviation range, update the information of the map locally stored in the server according to the current coordinate, and display an updated map to relevant personnel.

The second positioning module 403 is also configured to: determine, according to the position information, positioning information of the same target terminal by at least two converged base stations; perform position calculation on the target terminal according to the positioning information to determine a target position of the target terminal, and perform update processing on the information of the map locally stored in the server according to the target position and display processing on updated information of the map.

### Embodiment five

FIG. 5 is a diagram illustrating the structure of an electronic device according to embodiment five of the present application. FIG. 5 is a diagram illustrating the structure of an electronic device 10 that may be used to implement the embodiments of the present application. The electronic device is intended to represent various forms of digital computers, for example, a laptop computer, a desktop computer, a worktable, a personal digital assistant, a server, a blade server, a mainframe computer, or other applicable computers. The electronic device may also represent various forms of mobile apparatuses such as a personal digital processing apparatus, a cellular phone, a smart phone, a wearable device (for example, a helmet, glasses, and a watch), and other similar computing apparatuses. The components shown herein, their connections and relationships, and their functions, are by way of examples only and are not intended to limit implementations of this application described and/or claimed herein.

As shown in FIG. 5, the electronic device 10 includes at least one processor 11 and a memory communicatively connected to the at least one processor 11, such as a read-only memory (ROM) 12 and a random-access memory (RAM) 13. The memory stores a computer program executable by the at least one processor. The processor 11 may perform various appropriate actions and processes based on computer programs stored in a ROM 12 or loaded from a storage unit 18 into a RAM 13. The RAM 13 may also store multiple programs and data required for the operation of the electronic device 10. The processor 11, the ROM 12, and the RAM 13 are connected to each other through a bus 14. An input/output (I/O) interface 15 is also connected to the bus 14.

Multiple components in the electronic device 10 are connected to the I/O interface 15, including an input unit 16, such as a keyboard or a mouse; an output unit 17, such as multiple types of displays or speakers; a storage unit 18, such as a magnetic disk or an optical disk; and a communication unit 19, such as a network card, a modem, or a wireless communication transceiver. The communication unit 19 allows the electronic device 10 to exchange information/data with other devices through a computer network such as the Internet and/or multiple telecommunication networks.

The processor 11 may be multiple general-purpose and/or special-purpose processing components having processing and computing capabilities. Some examples of the processor 11 include but are not limited to, a central processing unit (CPU), a graphics processing unit (GPU), multiple dedicated artificial intelligence (AI) computing chips, multiple processors running machine learning model algorithms, a digital signal processor (DSP), and any suitable processors, controllers, and microcontrollers. The processor 11 performs the multiple methods and processing described above, for example, the terminal positioning method.

In some embodiments, the terminal positioning method may be implemented as a computer program tangibly embodied in a computer-readable storage medium, such as the storage unit 18. In some embodiments, part or all of the computer program may be loaded and/or installed on the electronic device 10 via the ROM 12 and/or the communication unit 19. When the computer program is loaded into the RAM 13 and executed by the processor 11, one or more steps of the terminal positioning method described above may be performed. Optionally, in other embodiments, the processor 11 may be configured to perform the terminal positioning method by any other suitable means (for example, by means of firmware).

Multiple implementations of the systems and techniques described above in this application may be implemented in a digital electronic circuit system, an integrated circuit system, a field programmable gate array (FPGA), an application specific integrated circuit (ASIC), an application specific standard product (ASSP), a system on chip system (SOC), a complex programmable logic device (CPLD), computer hardware, firmware, software, and/or combinations thereof. These multiple implementations may include an implementation in one or more computer programs that may be executable and/or interpretable on a programmable system including at least one programmable processor. The programmable processor may be special-purpose or general-purpose for receiving data and instructions from a memory system, at least one input apparatus, and at least one output apparatus and transmitting the data and instructions to the memory system, the at least one input apparatus, and the at least one output apparatus.

The computer program for implementing the terminal positioning method of the present application may be written in any combination of one or more programming languages. These computer programs may be provided to a processor of a general-purpose computer, a special-purpose computer, or other programmable data processing apparatus such that the computer programs, when executed by the processor, cause the functions/operations specified in flowcharts and/or block diagrams to be implemented. The computer program may be executed entirely or partly on the machine, as a stand-alone software package partly on the machine and partly on a remote machine, or entirely on the remote machine or server.

In the context of this application, a computer-readable storage medium may be a tangible medium that may contain or store a computer program for use by or in conjunction with an instruction execution system, apparatus, or device. The computer-readable storage medium may include, but is not limited to, electronic, magnetic, optical, electromagnetic, infrared, or semiconductor systems, apparatuses, or devices, or any suitable combination thereof. Optionally, the computer-readable storage medium may be a machine-readable signal medium. More specific examples of machine-readable storage medium may include an electrical connection having one or more wires, a portable computer magnetic disk, a hard disk, a RAM, a ROM, an erasable programmable read-only memory (EPROM) or a flash memory, an optical fiber, a portable compact disc read-only memory (CD-ROM), an optical storage device, a magnetic storage device, or any suitable combination thereof.

To provide interaction with a user, the systems and techniques described herein may be implemented on an electronic device. The electronic device has a display apparatus (for example, a CRT (cathode ray tube) or an LCD (liquid crystal display) monitor) for displaying information to a user; and a keyboard and pointing apparatus (for example, a mouse or a trackball) through which a user can provide input to the electronic device. Other types of apparatuses may also be used for providing interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware, or front-end components. Components of a system may be interconnected by any form or medium of digital data communication (for example, a communication network). Examples of the communication network include a local area network (LAN), a wide area network (WAN), a blockchain network, and the Internet.

The computing system may include a client and a server. A client and a server are generally remote from each other and typically interact through a communication network. The relationship between the client and the server arises by virtue of computer programs running on respective computers and having a client-server relationship to each other. The server, which may be a cloud server and is also referred to as a cloud computing server or a cloud host, is a host product in a cloud computing service system. The server solves the problems of difficult management and weak service scalability in the service of a related physical host and a related virtual private server (VPS).

It is to be understood that multiple forms of processes shown above may be adopted with steps reordered, added, or deleted. For example, the steps described in the present application may be performed in parallel, sequentially, or in different orders, as long as the desired results of the technical solutions of the present application can be achieved, and no limitation is imposed herein.

## Claims

1. A terminal positioning method, performed by a converged base station and comprising:
in response to detecting target configuration information sent by a server, sending the target configuration information and a working channel of a target terminal to the target terminal according to a sending time of the target configuration information, wherein the target configuration information and the working channel are used for the target terminal to return a positioning signal to the converged base station;
acquiring the positioning signal returned by the target terminal, and performing preliminary calculation processing on the positioning signal to convert the positioning signal into position information; and
sending the position information to the server, wherein the position information is used for the server to perform update processing on information of a map locally stored in the server and display processing on updated information of the map, to achieve positioning of the target terminal; and
the terminal positioning method further comprises: in response to a working state of any of a narrowband module, a positioning module, and a wideband module which are local to the converged base station being a service processing state, determining the sending time of the target configuration information according to a target service processing completing time; and in response to all working states of the narrowband module, the positioning module, and the wideband module which are local to the converged base station being an idle state, determining the sending time to be a current time;
wherein the target configuration information to be sent to the target terminal is determined by the server in the following manner:
in response to a working mode of the target terminal being an unmovable mode, the target configuration information to be sent to the target terminal is determined according to a first sending period and a first number of sending times; and
in response to the working mode of the target terminal being a movable mode, the target configuration information to be sent to the target terminal is determined according to a second sending period and a second number of sending times;
wherein the first sending period is greater than the second sending period, and the first number of sending times is less than the second number of sending times.

2. The terminal positioning method according to claim 1, wherein the converged base station comprises the narrowband module, the positioning module, and the wideband module; and sending the target configuration information and the working channel of the target terminal to the target terminal according to the sending time of the target configuration information comprises:
determining the sending time of the target configuration information and the working channel of the target terminal according to the working states of the narrowband module, the positioning module, and the wideband module which are local to the converged base station; and
sending the target configuration information and the working channel to the target terminal based on the sending time.

3. The terminal positioning method according to claim 2, wherein determining the working channel of the target terminal comprises:
in response to a working state of the wideband module local to the converged base station being an idle state, using a preset default working channel as the working channel of the target terminal; and
in response to the working state of the wideband module local to the converged base station being the service processing state or a pause state, determining a current channel of the wideband module, and screening, from candidate channels according to the current channel, a target channel that is different from the current channel, and using the target channel as the working channel of the target terminal.

4. A terminal positioning method, performed by a server and comprising:
determining target configuration information to be sent to a target terminal according to a positioning requirement of the target terminal, wherein the target configuration information comprises: a sending period and a number of sending times for the target terminal to send a positioning signal to a converged base station;
sending the target configuration information to the converged base station, wherein a sending time of the target configuration information is used for the converged base station to send the target configuration information and a working channel to the target terminal; and
acquiring position information returned by the converged base station, and performing update processing on information of a map locally stored in the server according to the position information and display processing on updated information of the map, to achieve positioning of the target terminal;
wherein in response to a working state of any of a narrowband module, a positioning module, and a wideband module which are local to the converged base station being a service processing state, the sending time of the target configuration information is determined according to a target service processing completing time by the converged base station; and in response to all working states of the narrowband module, the positioning module, and the wideband module which are local to the converged base station being an idle state, the sending time is determined to be a current time by the converged base station;
wherein determining the target configuration information to be sent to the target terminal comprises:
in response to a working mode of the target terminal being an unmovable mode, determining the target configuration information to be sent to the target terminal according to a first sending period and a first number of sending times; and
in response to the working mode of the target terminal being a movable mode, determining the target configuration information to be sent to the target terminal according to a second sending period and a second number of sending times; wherein the first sending period is greater than the second sending period, and the first number of sending times is less than the second number of sending times.

5. The terminal positioning method according to claim 4, wherein performing the update processing on the information of the map locally stored in the server according to the position information and the display processing on the updated information of the map comprises:
determining a historical coordinate of the target terminal in the map locally stored in the server, and determining whether a deviation between a current coordinate of the target terminal in the position information and the historical coordinate is within a preset deviation range; and
in response to the deviation between the current coordinate of the target terminal in the position information and the historical coordinate being within the preset deviation range, updating the information of the map locally stored in the server according to the current coordinate, and displaying an updated map to relevant personnel.

6. The terminal positioning method according to claim 4, wherein performing the update processing on the information of the map locally stored in the server according to the position information and the display processing on the updated information of the map comprises:
determining, according to the position information, positioning information of a same target terminal by at least two converged base stations; and
performing position calculation on the target terminal according to the positioning information to determine a target position of the target terminal, and performing the update processing on the information of the map locally stored in the server according to the target position and the display processing on the updated information of the map.

7. A terminal positioning apparatus, configured in a converged base station and comprising:
a first sending module, configured to, in response to detecting target configuration information sent by a server, send the target configuration information and a working channel of a target terminal to the target terminal according to a sending time of the target configuration information, wherein the target configuration information and the working channel are used for the target terminal to return a positioning signal to the converged base station;
a processing module, configured to acquire the positioning signal returned by the target terminal, and perform preliminary calculation processing on the positioning signal to convert the positioning signal into position information; and
a first positioning module, configured to send the position information to the server, wherein the position information is used for the server to perform update processing on information of a map locally stored in the server and display processing on updated information of the map, to achieve positioning of the target terminal;
wherein the apparatus is further configured to: in response to a working state of any of a narrowband module, a positioning module, and a wideband module which are local to the converged base station being a service processing state, determine the sending time of the target configuration information according to a target service processing completing time; and in response to all working states of the narrowband module, the positioning module, and the wideband module which are local to the converged base station being an idle state, determine the sending time to be a current time;
wherein the target configuration information to be sent to the target terminal is determined by the server in the following manner:
in response to a working mode of the target terminal being an unmovable mode, the target configuration information to be sent to the target terminal is determined according to a first sending period and a first number of sending times; and
in response to the working mode of the target terminal being a movable mode, the target configuration information to be sent to the target terminal is determined according to a second sending period and a second number of sending times;
wherein the first sending period is greater than the second sending period, and the first number of sending times is less than the second number of sending times.

8. A terminal positioning apparatus, configured in a server and comprising:
a determining module, configured to determine target configuration information to be sent to a target terminal according to a positioning requirement of the target terminal, wherein the target configuration information comprises: a sending period and a number of sending times for the target terminal to send a positioning signal to a converged base station;
a second sending module, configured to send the target configuration information to the converged base station, wherein a sending time of the target configuration information is used for the converged base station to send the target configuration information and a working channel to the target terminal; and
a second positioning module, configured to acquire position information returned by the converged base station, and perform update processing on information of a map locally stored in the server according to the position information and display processing on updated information of the map, to achieve positioning of the target terminal;
wherein in response to a working state of any of a narrowband module, a positioning module, and a wideband module which are local to the converged base station being a service processing state, the sending time of the target configuration information is determined according to a target service processing completing time by the converged base station; and in response to all working states of the narrowband module, the positioning module, and the wideband module which are local to the converged base station being an idle state, the sending time is determined to be a current time by the converged base station;
wherein the determining module is configured to: in response to a working mode of the target terminal being an unmovable mode, determine the target configuration information to be sent to the target terminal according to a first sending period and a first number of sending times; and in response to the working mode of the target terminal being a movable mode, determine the target configuration information to be sent to the target terminal according to a second sending period and a second number of sending times; wherein the first sending period is greater than the second sending period, and the first number of sending times is less than the second number of sending times.

9. An electronic device, comprising:
at least one processor; and
a memory communicatively connected to the at least one processor;
wherein the memory stores a computer program executable by the at least one processor, and the computer program, when executed by the at least one processor, causes the at least one processor to perform the terminal positioning method according to any one of claims 1 to 3 and the terminal positioning method according to any one of claims 4 to 6.

10. A computer-readable storage medium storing computer instructions that, when executed by a processor, perform the terminal positioning method according to any one of claims 1 to 3 and the terminal positioning method according to any one of claims 4 to 6.
